# EUROPÄISCHE PATENTSCHRIFT

(11) **EP 2 113 406 B1**
(45) Veröffentlichungstag und Bekanntmachung des Hinweises auf die Patenterteilung: **11.07.2012**
(21) Anmeldenummer: 09004823.2
(22) Anmeldetag: 01.04.2009
(51) Int. Cl.: B60G 13/00, B60G 13/18, F16F 7/104, F16F 9/54, F16F 7/108

(54) **Schwingungsdämpfungsanordnung mit einem dem Dämpferlager zugeordneten Tilger**
Shock absorber assembly with an elastic bearing having an integrated mass damper
Agencement d'amortisseur de vibrations avec un batteur inertiel sur le support de l'amortisseur

(30) Priorität: 28.04.2008 DE 102008021136
(43) Veröffentlichungstag der Anmeldung: 04.11.2009
(73) Patentinhaber: Carl Freudenberg KG, 69469 Weinheim (DE)
(72) Erfinder: Meß, Michael, Dr., 21075 Hamburg (DE); Sell, Hendrik, Dr., 22607 Hamburg (DE); Schmidt, Ronny, 21079 Hamburg (DE); Mitsui, Tadashi, 21077 Hamburg (DE); Paul, Christian, 79424 Auggen (DE)

(56) Entgegenhaltungen:
- EP-A- 0 992 372
- DE-C1- 4 127 616
- FR-A- 2 535 259
- US-A- 5 873 565

## Beschreibung

### Technisches Gebiet

Die Erfindung betrifft eine Schwingungsdämpfungsanordnung nach dem Oberbegriff des Anspruchs 1. Ein Beispiel einer solchen Schwingungsdämpfungsanordnung ist aus der EP 0992 372 A1 bekannt.

### Stand der Technik

Bei der Abstimmung der Schwingungsdämpfer von Kraftfahrzeugen gibt es ein akustisches Problem auf, welches sich in Poltergeräuschen im Fahrbetrieb äußert. Aus Messungen an den betroffenen Bauteilen sowie in verschiedenen Fahrzeugen hat sich ergeben, dass eine Ursache für die Poltergeräusche eine Schwingung der Dämpferkolbenstange im elastischen Dämpferlager sein kann.

Schwingungsdämpfer in Kraftfahrzeugen werden meist über Dämpferlager, elastische Elemente meist Gummi-Metall- oder Polyurethanschaum-Bauteile angebunden. Diese werden auch als Topmounts oder Kopflager bezeichnet. Die Aufgabe des Dämpferlagers besteht darin, die maximale Steifigkeit des Dämpfer-Lager-Verbundes zu begrenzen. Für den Fall, dass der Dämpfer sich aufgrund innerer Reibung nicht bewegt, stellt das elastische Element die wirksame Steifigkeit dar. Durch die Kombination von Dämpfer und Dämpfer-Lager entsteht jedoch auch ein neues schwingungsfähiges System: die Kolbenstange des Dämpfers kann gegen das Dämpfer-Lager als Feder schwingen. Selbst wenn der Dämpfer Fußpunkt und der karosserieseitige Dämpfer-Lagerausgang festgesetzt würden, kann das System aus Kolbenstange und Dämpfer-Lager schwingen. Das Schwingungssystem aus Kolbenstange und Dämpfer-Lager hat eine Starrkörper-Eigenfrequenz, die wesentlich von der Masse der Kolbenstange und der dynamischen Steifigkeit des Dämpfer-Lagers abhängig ist. Sowohl durch Reibanregung, als auch durch hydraulische Anregung des Dämpfers, wird dieses Schwingungssystem im Fahrbetrieb angeregt. Die Folge sind sog. Poltergeräusche, die im Fahrzeug als lästig bzw. störend empfunden werden. Bisher wird einerseits versucht, die Anregung des Dämpfers durch konstruktive Maßnahmen zu minimieren. Dies ist jedoch nicht immer möglich, ohne die gewünschte hydraulische Wirkung zu verlieren. Andererseits wird versucht, durch die Gestaltung einer nichtlinearen Dämpfer-Lager Kraft-Weg Kennlinie (Steifigkeitsverlauf über dem Federweg) die Poltergeräusche zu beeinflussen. Veränderungen an der Kraft-Weg Kennlinie des Dämpfer-Lagers beeinflussen jedoch nicht nur das Poltergeräusch, sondern auch das fahrdynamische Verhalten des Fahrzeugs. Dazu zählen beispielsweise das Lenkverhalten und das sogenannte Achstrampeln. An dieser Stelle ergibt sich bisher häufig ein Zielkonflikt, da sich die Dämpfer-Lager Anforderungen für die Fahrsicherheit und gegen das Dämpfer-Poltern widersprechen.

Aus der DE 41 29 797 A1 ist eine Dämpfungsanordnung für ein Kraftfahrzeug bekannt. Diese Dämpfungsanordnung besteht aus einen Stoßdämpfer mit einer Kolbenstange, wobei der Stoßdämpfer über ein Dämpferlager, an dem die Kolbenstange befestigt wird, an der Karosserie eines Kraftfahrzeugs befestigt wird. Die vorbekannte Dämpfungsanordnung weist einen Schwigungstilger auf, der als separates Bauteil an der Kolbenstange befestigt wird. Der Schwingungstilger umfasst ein Topfelement von dem aus sich mehrere elastische Arme radial nach außen erstrecken und in ein Massenelement münden. Aufgabe des Schwingungstilgers ist es, einen über die Kolbenstange in die Karosserie eintretenden Schwingungsanteil, welcher ein Zittern verursacht, zu dämpfen.

### Darstellung der Erfindung

Der Erfindung liegt die Aufgabe zugrunde, eine Schwingungsdämpfungsanordnung für ein Kraftfahrzeug mit einem Tilger einfach und kostengünstig herzustellen.

Diese Aufgabe wird mit den Merkmalen von Anspruch 1 gelöst. Auf vorteilhafte Ausgestaltungen nehmen die Unteransprüche Bezug.

Zur Lösung der Aufgabe ist dem Dämpferlager ein Tilger zugeordnet. Ein Schwingungstilger ist ein Feder-Masse Schwinger, bei dem die Masse frei schwingen kann. Dies bedeutet, dass der Tilger nicht im Kraftfluss liegt. Die Dämpferkräfte, die vom Dämpfer-Lager abgestützt werden müssen, werden daher nicht über den Tilger übertragen. Daher kann die Tilgerfunktion unabhängig vom Rest des Dämpfer-Lagers eingestellt werden. Da jeder Stoßdämpfer über ein Dämpferlager an einer Kraftfahrzeugkarosserie angebunden wird und jedes Dämpferlager einen Elastomerkörper als Entkopplungselement aufweist, ist ein Tilger in diesem Bauteil besonders kostengünstig integrierbar. Für die Elastomerkörper von Tilger und Dämpferlager können ähnliche oder gleiche Werkstoffe verwendet werden und es können Bauteile des Dämpferlagers, die dem Stoßdämpfer zugeordnet sind, als Anbindung oder Bestandteil des Tilgers verwendet werden. Die Anordnung des Tilgers in dem Dämpferlager ist besonders Platz sparend und die Schwingungsdämpfungsanordnung weist trotz eines integrierten Tilgers, insbesondere oberhalb der Karosserieanbindung keinen erhöhten Bauraumbedarf auf. Überraschend wurde festgestellt, dass mit einer frequenzselektiven Bauteilkomponente wie einem Tilger das Polter-Problem gelöst werden kann. Die Wirkung ist überraschend, weil sich ein Tilger immer erst einschwingen muss, bevor er seine volle Wirkung entfaltet. Die gute Wirkung war bei den eher impulsartigen Anregungen im Fahrbetrieb nicht erwartet worden.

Das Dämpferlager weist einen der Kolbenstange zugeordneten Kern und ein der Karosserie zugeordnetes Außenteil auf, die durch einen ersten Elastomerkörper miteinander verbunden sind, wobei der Tilger dem Kern zugeordnet ist. Die Anregung des Tilgers erfolgt dann durch den Kern, der wiederum direkt mit der Kolbenstange verbunden ist. Dadurch werden besonders wirksam störende Schwingungen getilgt, die sonst über die Kolbenstange an das Dämpferlager übertragen werden und Geräuschbildung verursachen.

Der Tilger kann ein integrativer Bestandteil des Dämpferlagers sein. Das bedeutet, dass der Tilger integrativ mit mindestens einem Bauteil des Dämpferlagers hergestellt wird. Der Tilger bildet also ein mit dem Dämpferlager zusammenhängendes einziges Bauteil, in dem die Funktionen Lagerung, Entkopplung und Schwingungstilgung integriert sind.

Der Tilger weist eine Tilgermasse und einen zweiten Elastomerkörper auf, wobei der erste Elastomerkörper und der zweite Elastomerkörper materialeinheitlich und einstückig ausgebildet sind. Die Elastomerkörper können in einem gemeinsamen Herstellungsschritt in einem Zug hergestellt werden. Es entsteht ein Dämpferlager als ein einziges Bauteil mit einer Vielzahl von Funktionen, bei gleichzeitiger Kompaktheit. Die Tilgermasse ist frei schwingend angeordnet und ist über den zweiten Elastomerkörper mit dem Kern des Dämpferlagers verbunden und wird durch Vibrationen der Kolbenstange angeregt.

Der erste Elastomerkörper und der zweite Elastomerkörper sind voneinander beabstandet und durch eine Elastomerspur miteinander verbunden. Beide Elastomerkörper können demnach beabstandet voneinander sein und trotzdem aufgrund der Elastomerspur einstückig und materialeinheitlich ausgebildet sein. Es ist bei unverändert einfacher Herstellbarkeit möglich, die Tilgermasse hinsichtlich der Tilgerwirkung optimal zu positionieren. Die Tilgermasse kann ringförmig ausgebildet sein und die Kolbenstange umgeben.

### Kurzbeschreibung der Zeichnung

Ein Ausführungsbeispiel der erfindungsgemäßen Dämpfungsanordnung wird nachfolgend anhand der Figur näher erläutert. Diese zeigt schematisch:

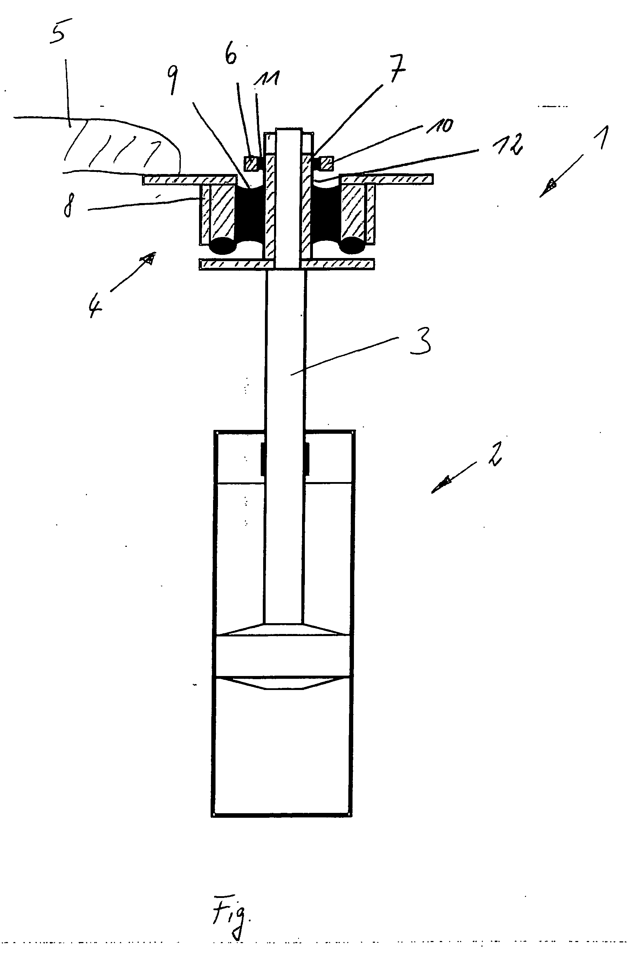

Fig. 1 die Dämpfungsanordnung im Längsschnitt.

### Ausführung der Erfindung

Figur 1 zeigt eine Schwingungsdämpfungsanordnung 1 für ein Kraftfahrzeug, bestehend aus einem Stoßdämpfer 2 mit einer Kolbenstange 3, wobei die Kolbenstange 3 mit einem Dämpferlager 4 verbunden ist und das Dämpferlager 4 mit einer Karosserie 5 eines Kraftfahrzeugs verbunden ist sowie einem Tilger 6, der dem Dämpferlager 4 zugeordnet ist. Das Dämpferlager 4 weist einen der Kolbenstange 3 zugeordneten Kern 7 und ein der Karosserie 5 zugeordnetes Außenteil 8 auf, die durch einen ersten Elastomerkörper 9 miteinander verbunden sind, wobei der Tilger 6 dem Kern 7 zugeordnet ist und dadurch ein integrativer Bestandteil des Dämpferlagers 4 ist. Der Tilger 6 besteht aus einer Tilgermasse 10 und einen zweiten Elastomerkörper 11, wobei der erste Elastomerkörper 9 und der zweite Elastomerkörper 11 materialeinheitlich und einstückig ausgebildet sind. Die Tilgermasse 10 ist ringförmig ausgebildet und umgibt die Kolbenstange 3. Der erste Elastomerkörper 9 und der zweite Elastomerkörper 11 sind voneinander beabstandet und durch eine Elastomerspur 12 miteinander verbunden.

## Patentansprüche

1. Schwingungsdämpfungsanordnung (1) für ein Kraftfahrzeug, umfassend einen Stossdämpfer (2) mit einer Kolbenstange (3), wobei die Kolbenstange (3) mit einem Dämpferlager (4) verbunden ist und das Dämpferlager (4) mit einer Karosserie (5) eines Kraftfahrzeugs verbindbar ist, wobei das Dämpferlager (4) einen der Kolbenstange (3) zugeordneten Kern (7) und ein der Karosserie (5) zugeordnetes Außenteil (8) aufweist, die durch einen ersten Elastomerkörper (9) miteinander verbunden sind, wobei ein Tilger (6) dem Kern (7) zugeordnet ist, wobei der Tilger (6) eine Tilgermasse (10) und einen zweiten Elastomerkörper (11) aufweist, **dadurch gekennzeichnet, dass** der erste Elastomerkörper (9) und der zweite Elastomerkörper (11) materialeinheitlich und einstückig ausgebildet sind,
wobei
der erste Elastomerkörper (9) und der zweite Elastomerkörper (11) voneinander beabstandet und durch eine Elastomerspur (12) miteinander verbunden sind.

2. Schwingungsdämpfungsanordnung nach Anspruch 1, **dadurch gekennzeichnet, dass** der Tilger (6) ein integrativer Bestandteil des Dämpferlagers (4) ist.

3. Schwingungsdämpfungsanordnung nach Anspruch 1, **dadurch gekennzeichnet, dass** die Tilgermasse (10) ringförmig ausgebildet ist und die Kolbenstange (3) umgibt.

## Claims

1. Vibration damping arrangement (1) for a motor vehicle, comprising a shock damper (2) with a piston rod (3), the piston rod (3) being connected to a damper bearing (4), and the damper bearing (4) being connectable to a body (5) of a motor vehicle, the damper bearing (4) having a core (7) assigned to the piston rod (3) and an outer part (8) assigned to the body (5), said core and said outer part being connected to one another by means of a first elastomeric body (9), an absorber (6) being assigned to the core (7), the absorber (6) having an absorber mass (10) and a second elastomeric body (11), **characterized in that** the first elastomeric body (9) and the second elastomeric body (11) are produced in a materially integral manner and in one piece, the first elastomeric body (9) and the second elastomeric body (11) being spaced apart from one another and being connected to one another by means of an elastomeric track (12).

2. Vibration damping arrangement according to Claim 1, **characterized in that** the absorber (6) is an integral part of the damper bearing (4).

3. Vibration damping arrangement according to Claim 1, **characterized in that** the absorber mass (10) is of ring-shaped form and surrounds the piston rod (3).

## Revendications

1. Agencement amortisseur de vibrations (1) pour un véhicule automobile, comprenant un amortisseur (2) avec une tige de piston (3), la tige de piston (3) étant connectée à un support d'amortisseur (4) et le support d'amortisseur (4) pouvant être connecté à une carrosserie (5) d'un véhicule automobile, le support d'amortisseur (4) présentant un noyau (7) associé à la tige de piston (3) et une partie extérieure (8) associée à la carrosserie (5), lesquels sont connectés l'un à l'autre par un premier corps élastomère (9), un batteur (6) étant associé au noyau (7), le batteur (6) présentant une masse de batteur (10) et un deuxième corps élastomère (11), **caractérisé en ce que** le premier corps élastomère (9) et le deuxième corps élastomère (11) sont réalisés d'une seule pièce venue de matière,
le premier corps élastomère (9) et le deuxième corps élastomère (11) étant espacés l'un de l'autre et étant connectés l'un à l'autre par une nervure en élastomère (12).

2. Agencement amortisseur de vibrations selon la revendication 1, **caractérisé en ce que** le batteur (6) fait partie intégrante du support d'amortisseur (4).

3. Agencement amortisseur de vibrations selon la revendication 1, **caractérisé en ce que** la masse de batteur (10) est réalisée sous forme annulaire et entoure la tige de piston (3).
